# EUROPEAN PATENT SPECIFICATION

(11) **EP 4 290 610 B1**
(45) Date of publication and mention of the grant of the patent: **11.11.2026**
(21) Application number: 22833460.3
(22) Date of filing: 15.06.2022
(51) Int. Cl.: H01M 4/36, H01M 4/525, H01M 4/505, H01M 4/62, H01M 10/052, H01M 4/02, H01M 4/38, H01M 10/0525

(54) **LITHIUM SECONDARY BATTERY**
LITHIUMSEKUNDÄRBATTERIE
BATTERIE SECONDAIRE AU LITHIUM

(30) Priority: 28.06.2021 KR 20210084276
(43) Date of publication of application: 13.12.2023
(73) Proprietor: LG Energy Solution, Ltd., Seoul 07335 (KR)
(72) Inventor: LEE, Dong-Hun, Daejeon 34122 (KR); KONG, Woo-Yeon, Daejeon 34122 (KR); KIM, Hye-Mi, Daejeon 34122 (KR); PARK, Sin-Young, Daejeon 34122 (KR); LEE, Sang-Wook, Daejeon 34122 (KR); KIM, Je-Young, Daejeon 34122 (KR); JUNG, Wang-Mo, Daejeon 34122 (KR)
(74) Representative: Hoffmann Eitle
(86) International application number: PCT/KR2022/008500
(87) International publication number: WO 2023/277404

(56) References cited:
- JP-A- 2015 225 741
- JP-A- 2017 033 839
- KR-A- 20010 095 076
- KR-A- 20190 032 248
- KR-A- 20210 051 639
- US-A1- 2017 033 403
- US-A1- 2020 313 180
- US-A1- 2021 078 868

## Description

### TECHNICAL FIELD

The present disclosure relates to a lithium secondary battery comprising a Ni-rich positive electrode active material.

### BACKGROUND ART

A Ni-rich lithium composite transition metal oxide positive electrode active material is gaining attention as a positive electrode active material of a lithium secondary battery.

In general, the Ni-rich lithium composite transition metal oxide positive electrode active material is manufactured by mixing a Ni-rich composite transition metal precursor synthesized by the coprecipitation method with a lithium raw material at a predetermined ratio, and sintering the mixture in an oxygen atmosphere. The resultant positive electrode active material is in the form of secondary particles formed by agglomeration of primary particles, and its life characteristics sharply reduces with the increasing nickel content.

To solve this problem, after manufacturing a Ni-rich lithium positive electrode active material by the above-described method, and to ensure the life characteristics (stability) of the positive electrode active material, coating a boron precursor on the surface of the positive electrode active material particles and thermally treating to form a boron containing coating layer has been suggested.

Recently, there is a need for development of lithium secondary batteries having higher energy and rapid charging characteristics, and in this circumstance, there is a growing need for the improved life characteristics of lithium secondary batteries comprising Ni-rich positive electrode active materials.

US 2020/313180 A1 describes a positive electrode active material for a nonaqueous electrolyte secondary battery includes a lithium-nickel composite oxide. At least a part of a surface of the lithium-nickel composite oxide is coated with Li₃BO₃. The content of boron in the positive electrode active material is 0.001% by mass or more and 0.2% by mass or less with respect to the entire positive electrode active material.

US 2021/078868 A1 describes a positive electrode active material which includes lithium composite transition metal oxide particles, and a coating portion formed on surfaces of the lithium composite transition metal oxide particles, wherein the coating portion includes lithium (Li)-metal borate.

### DISCLOSURE

### Technical Problem

Therefore, an embodiment of the present disclosure is directed to providing a lithium secondary battery with improved life characteristics comprising a Ni-rich positive electrode active material for a lithium secondary battery.

### Technical Solution

The invention is set out in the appended set of claims.

To solve the above-described technical problem, a lithium secondary battery according to a first embodiment of the present disclosure comprises a positive electrode comprising a positive electrode active material, a negative electrode comprising a negative electrode active material and a nonaqueous electrolyte solution, wherein the positive electrode active material comprises a lithium composite transition metal oxide having a nickel content of 60 mol% or more in a total transition metal in a form of secondary particles formed by agglomeration of primary particles; and a boron containing coating layer on a surface of all or some of the primary particles, the lithium composite transition metal oxide is represented by the chemical formula 1 as described below, the nonaqueous electrolyte solution comprises a boron dissolved in the nonaqueous electrolyte solution, the boron content (A) in the positive electrode active material is 100 to 4,000 ppm, and the boron content (B) in the nonaqueous electrolyte solution is 1 to 3,000 ppm, wherein boron content is determined by the method described below, and a ratio B/A of the boron content B in the nonaqueous electrolyte solution to the boron content A in the positive electrode active material is 0.001 to 5:

<Chemical formula 1> Liₐ[NiₓCo_{y}M¹_{z}M²_{w}]O₂

where M¹ is at least one selected from Mn and Al,
M² is at least one selected from Zr, B, W, Mo, Cr, Nb, Mg, Hf, Ta, La, Ti, Sr, Ba, Ce, F, P, S and Y, and
0.9≤a≤1.3, 0.6≤x<1.0, 0<y≤0.4, 0<z≤0.4, 0≤w≤0.4, x+y+z+w=1.

### Advantageous Effects

In the lithium secondary battery comprising the Ni-rich positive electrode active material according to the present disclosure, the positive electrode active material has the boron containing coating layer on the surface, and the ratio between the boron content in the positive electrode active material and the boron content in the nonaqueous electrolyte solution is controlled to the predetermined range.

The above-described lithium secondary battery has improved life characteristics (stability) and can be used especially in environments requiring higher energy and rapid charging.

### BEST MODE

Hereinafter, the present disclosure will be described in detail. It should be understood that the terms or words used in the specification and the appended claims should not be construed as limited to general and dictionary meanings, but interpreted based on the meanings and concepts corresponding to technical aspects of the present disclosure, on the basis of the principle that the inventor is allowed to define terms appropriately for the best explanation.

A lithium secondary battery according to an embodiment of the present disclosure comprises a positive electrode comprising a positive electrode active material, a negative electrode comprising a negative electrode active material and a nonaqueous electrolyte solution.

The inventors found that when in the lithium secondary battery comprising a Ni-rich positive electrode active material, the positive electrode active material has a boron containing coating layer on the surface and a ratio between the boron content in the positive electrode active material and the boron content in the nonaqueous electrolyte solution is controlled to a predetermined range, surprisingly, the life characteristics (stability) of the lithium secondary battery are improved, and based on the findings, they made the invention.

The boron contained in the positive electrode active material is added by forming the boron containing coating layer on lithium composite transition metal oxide particles, and when forming the boron containing coating layer, some of the lithium composite transition metal oxide particles are doped with boron.

The boron contained in the nonaqueous electrolyte solution is added when boron in the positive electrode active material having the boron containing coating layer is eluted into the nonaqueous electrolyte solution due to the presence of a small amount of moisture in the cell, the activation process in the cell fabrication and the shipping process, and is also added when a boron containing lithium salt is added to the nonaqueous electrolyte solution as a lithium salt.

The lithium secondary battery according to the present disclosure comprises the positive electrode active material comprising lithium composite transition metal oxide having the nickel content of 60 mol% or more in the total transition metal in the form of secondary particles formed by agglomeration of primary particles; and the boron containing coating layer on the surface of all or some of the primary particles, and the nonaqueous electrolyte solution, wherein the nonaqueous electrolyte solution comprises boron dissolved therein, and a ratio B/A of the boron content B in the nonaqueous electrolyte solution to the boron content A in the positive electrode active material is controlled to 0.001 to 5, thereby improving the life characteristics (stability) of the lithium secondary battery.

From the life characteristics perspective of the lithium secondary battery, the ratio B/A of the boron content B in the nonaqueous electrolyte solution to the boron content A in the positive electrode active material may be specifically 0.005 to 4 and more specifically 0.02 to 4. The boron content A in the positive electrode active material is 100 to 4,000 ppm and the boron content B in the nonaqueous electrolyte solution may is 1 to 3,000 ppm, and more specifically, the boron content A in the positive electrode active material may be 500 to 2,000 ppm and the boron content B in the nonaqueous electrolyte solution may be 10 to 2,000 ppm. In particular, the boron content A in the positive electrode active material may be 500 to 2,000 ppm, the boron content B in the nonaqueous electrolyte solution may be 10 to 2,000 ppm, and the B/A may be 0.005 to 4 and more specifically 0.02 to 4.

### [Positive electrode]

First, the positive electrode active material of the lithium secondary battery of the present disclosure and the positive electrode comprising the same will be described.

The positive electrode active material comprises lithium composite transition metal oxide having the nickel content of 60 mol% or more in the total transition metal in the form of secondary particles formed by agglomeration of primary particles.

Although described in more detail below, the lithium composite transition metal oxide having the nickel content of 60 mol% or more in the total transition metal in the form of secondary particles formed by agglomeration of primary particles may be easily prepared by those skilled in the art according to the well-known method such as the coprecipitation method.

The lithium composite transition metal oxide is represented bythe following chemical formula 1.

<Chemical formula 1> Liₐ[NiₓCo_{y}M¹_{z}M²_{w}]O₂

where M¹ is at least one selected from Mn and Al,
M² is at least one selected from Zr, B, W, Mo, Cr, Nb, Mg, Hf, Ta, La, Ti, Sr, Ba, Ce, F, P, S and Y, and
0.9≤a≤1.3, 0.6≤x<1.0, 0<y≤0.4, 0<z≤0.4, 0≤w≤0.4, x+y+z+w=1.

The average particle size of the primary particles may be 0.1 to 8 µm, D50 of the secondary particles may be 8 to 15 µm, and more specifically, the average particle size of the primary particles may be 0.15 to 7 µm, and D50 of the secondary particles may be 3 to 13 µm. Here, the average particle size of the primary particles refers to the average particle size of the primary particles measured by X-ray diffraction analysis and D50 of the secondary particles is defined as a particle size at 50% of particle size distribution, and may be measured using a laser diffraction method, and refers to a value of D50 of the secondary particles measured by laser diffraction.

The lithium composite transition metal oxide having the nickel content of 60 mol% or more in the total transition metal has the boron containing coating layer on the surface of all or some of the primary particles.

Here, the primary particle refers to a single grain or crystallite.

Additionally, the secondary particle refers to an agglomerate of the primary particles, and may include voids and boundaries between different primary particles.

Since the coating layer is formed on the surface of all or some of the primary particles, an embodiment of the coating layer includes the coating layer connected to completely fill the voids between the primary particles. Preferably, the coating layer is formed on the surface of all of the primary particles such that it completely fills the voids between the primary particles.

The boron containing coating layer may comprise B. Specifically, the coating layer may contain boron in the form of at least one type of amorphous boron compound selected from the group consisting of lithium boron oxide and boron oxide, for example, LiBO₂, Li₂B₄O₇, LiB₃O₅.

Here, as opposed to crystalline compounds that only allow discontinuous coating in particulate form, the amorphous boron compound allows continuous coating in the shape of a film, an island or a combination thereof.

The boron containing coating layer may improve the life characteristics of the lithium secondary battery, and reduce the barrier energy to Li ion transfer by virtue of boron contained therein. Additionally, it is possible to improve the stability of the positive electrode active material by preventing the direct contact between the secondary particles and the electrolyte solution.

The positive electrode active material in the above-described form may be manufactured by the following method, but is not limited thereto.

First, lithium composite transition metal oxide having the nickel content of 60 mol% or more in the total transition metal in the form of secondary particles formed by agglomeration of primary particles is prepared.

The secondary particles may include those available in the market and may be directly produced using the coprecipitation method. More specifically, the secondary particles formed by agglomeration of Ni-rich composite transition metal hydroxide particles may be obtained as a precursor using the coprecipitation method known in the technical field and mixed with a lithium source, followed by sintering. Here, the method for controlling the precursor composition in the coprecipitation method and the type of the lithium source may follow the well-known technical knowledge. The composition of the lithium composite transition metal oxide having the nickel content of 60 mol% or more in the total transition metal may be represented by the above-described chemical formula 1.

Subsequently, the secondary particles are mixed with a boron precursor and sintered in an oxygen atmosphere to form the boron containing coating layer on the surface of all or some of the primary particles.

Here, the oxygen atmosphere refers to an atmosphere comprising enough oxygen for sintering in an ambient atmosphere. In particular, the sintering is preferably performed in an atmosphere in which the partial pressure of oxygen is higher than the ambient atmosphere.

The boron precursor may be a powder comprising amorphous compound particles comprising boron B. For example, the boron precursor may be a boric acid (boric acid, H₃BO₃) powder whose melting point is 170.9°C, and the boric acid may sufficiently melt while maintaining the secondary particles in particulate state when mixed in solid phase and sintered. The sintering temperature may be 150 to 500°C, and more specifically 300 to 400°C. The boron precursor mixed with the secondary particles may contain boron in the form of an amorphous boron compound such as a lithium boron oxide, for example, LiBO₂, Li₂B₄O₇, LiB₃O₅ or a boron oxide when sintered in the oxygen atmosphere.

The boron content in the positive electrode active material may be adjusted by adjusting the amount of the boron precursor.

According to the above-described manufacturing method, it is possible to manufacture the Ni-rich positive electrode active material preferably having the reduced lithium impurity content to 0.6 weight% or less, and more preferably 0.5 weight% or less without a washing process.

The resultant positive electrode active material may be coated on an electrode current collector and used as follows.

For example, the positive electrode current collector is not limited to a particular type and may include any type of material having conductive properties without causing any chemical change to the battery, for example, stainless steel, aluminum, nickel, titanium, sintered carbon or aluminum or stainless steel treated with carbon, nickel, titanium or silver on the surface. Additionally, the positive electrode current collector may be generally 3 to 500 *µ*m in thickness, and may have microtexture on the surface to improve the adhesion strength of the positive electrode active material. For example, the positive electrode current collector may come in various forms, for example, films, sheets, foils, nets, porous bodies, foams and non-woven fabrics.

In addition to the positive electrode active material, the positive electrode active material layer may comprise a conductive material and optionally a binder if necessary. In this instance, the positive electrode active material may be included in an amount of 80 to 99 weight%, and more specifically 85 to 98.5 weight% based on the total weight of the positive electrode active material layer. The amount of the positive electrode active material in the above-described range may contribute to the improved capacity characteristics.

The conductive material is used to impart conductivity to the electrode, and may include, without limitation, any type of conductive material capable of conducting the flow of electrons without causing any chemical change in the battery. Specific examples of the conductive material may include at least one of graphite, for example, natural graphite or artificial graphite; carbon-based materials, for example, carbon black, acetylene black, ketjen black, channel black, furnace black, lamp black, thermal black and carbon fibers; metal powder or metal fibers, for example, copper, nickel, aluminum and silver; conductive whiskers, for example, zinc oxide and potassium titanate; conductive metal oxide, for example, titanium oxide; or conductive polymers, for example, polyphenylene derivatives. The conductive material may be included in an amount of 0.1 to 15 weight% based on the total weight of the positive electrode active material layer.

The binder serves to improve the bonds between the positive electrode active material particles and the adhesion strength between the positive electrode active material and the current collector. Specific examples of the binder may include, but is not limited to, at least one of polyvinylidene fluoride (PVDF), polyvinylidene fluoride-hexafluoropropylene copolymer (PVDF-co-HFP), polyvinylalcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylenepropylene-diene polymer (EPDM), sulfonated-EPDM, styrene butadiene rubber (SBR), fluoro rubber, or a variety of copolymers thereof. The binder may be included in an amount of 0.1 to 15 weight% based on the total weight of the positive electrode active material layer.

The positive electrode for a lithium secondary battery may be manufactured by the common positive electrode manufacturing method except that the above-described positive electrode active material is used. Specifically, the positive electrode may be manufactured by dissolving or dispersing the positive electrode active material and optionally, the binder and the conductive material in a solvent to prepare a positive electrode active material layer-forming composition, and applying the positive electrode active material layer-forming composition onto the positive electrode current collector, followed by drying and rolling.

Alternatively, the positive electrode may be manufactured by casting the positive electrode active material layer-forming composition on a support, peeling off a film from the support and laminating the film on the positive electrode current collector.

### [Nonaqueous electrolyte solution]

The nonaqueous electrolyte solution will be described below by way of illustration.

The nonaqueous electrolyte solution may comprise an organic solvent and a lithium salt.

The organic solvent may include, without limitation, any type of organic solvent that acts as a medium for the movement of ions involved in the electrochemical reaction of the battery. Specifically, the organic solvent may include an ester-based solvent, for example, methyl acetate, ethyl acetate, γ-butyrolactone, ε-caprolactone; an ether-based solvent, for example, dibutyl ether or tetrahydrofuran; a ketone-based solvent, for example, cyclohexanone; an aromatic hydrocarbon-based solvent, for example, benzene, fluorobenzene; a carbonate-based solvent, for example, dimethylcarbonate (DMC), diethylcarbonate (DEC), methylethylcarbonate (MEC), ethylmethylcarbonate (EMC), ethylene carbonate (EC), propylene carbonate (PC); an alcohol-based solvent, for example, ethylalcohol, isopropyl alcohol; nitriles of R-CN (R is a C2 to C20 straight-chain, branched-chain or cyclic hydrocarbon, and may comprise an exocyclic double bond or ether bond); amides, for example, dimethylformamide; dioxolanes, for example, 1,3-dioxolane; or sulfolanes. Among them, the carbonate-based solvent is desirable, and more preferably, the linear carbonate-based compound (for example, ethylmethyl carbonate, dimethyl carbonate or diethyl carbonate) of low viscosity may be mixed with a cyclic carbonate (for example, ethylene carbonate or propylene carbonate) having high ionic conductivity and a high dielectric constant which contributes to the improved charge/discharge performance of the battery. In this case, the cyclic carbonate and the chain carbonate may be mixed at a volume ratio of about 1:1 to about 1:9 to improve the performance of the electrolyte solution.

The lithium salt may include, without limitation, any compound that can provide lithium ions used in lithium secondary batteries. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. That is, the nonaqueous electrolyte solution may comprise a boron containing lithium salt as the lithium salt and may not comprise the boron containing lithium salt.

The concentration of the lithium salt may range from 0.1 to 2.0M. When the concentration of the lithium salt is included in the above-described range, the nonaqueous electrolyte solution has the optimal conductivity and viscosity, resulting in good performance of the electrolyte and effective movement of lithium ions.

In addition to the above-described electrolyte components, the nonaqueous electrolyte solution may further comprise, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride to improve the life characteristics of the battery, prevent the capacity fading of the battery and improve the discharge capacity of the battery. In this instance, the additive may be included in an amount of 0.1 to 5 weight% based on the total weight of the electrolyte.

As described above, the boron contained in the nonaqueous electrolyte solution is added when boron in the positive electrode active material having the boron containing coating layer is eluted into the nonaqueous electrolyte solution due to the presence of a small amount of moisture in the cell, the activation process in the cell fabrication and the shipping process, and is also added when the boron containing lithium salt is added to the nonaqueous electrolyte solution as the lithium salt.

### [Negative electrode]

The positive electrode and the nonaqueous electrolyte solution prepared by the above-described method are used to manufacture a lithium secondary battery together with the commonly used negative electrode.

The negative electrode will be described below by way of illustration.

The negative electrode comprises a negative electrode current collector and a negative electrode active material layer on the negative electrode current collector.

The negative electrode current collector may include any type of material having high conductivity without causing any chemical change to the battery, for example, copper, stainless steel, aluminum, nickel, titanium, sintered carbon, copper or stainless steel treated with carbon, nickel, titanium or silver on the surface and an aluminum-cadmium alloy, but is not limited thereto. Additionally, the negative electrode current collector may be generally 3 to 500 *µ*m in thickness, and in the same way as the positive electrode current collector, the negative electrode current collector may have microtexture on the surface to improve the bonding strength of the negative electrode active material. For example, the negative electrode current collector may come in various forms, for example, films, sheets, foils, nets, porous bodies, foams and non-woven fabrics.

In addition to the negative electrode active material, the negative electrode active material layer optionally comprises a binder and a conductive material. For example, the negative electrode active material layer may be formed by applying a negative electrode-forming composition comprising the negative electrode active material and optionally the binder and the conductive material onto the negative electrode current collector and drying, or by casting the negative electrode-forming composition on a support, peeling off a film from the support and laminating the film on the negative electrode current collector.

The negative electrode active material may include compounds capable of reversibly intercalating and deintercalating lithium. Specific examples of the negative electrode active material may include at least one of a carbonaceous material, for example, artificial graphite, natural graphite, graphitizing carbon fibers, amorphous carbon; a metallic material that can form an alloy with lithium, for example, Si, Al, Sn, Pb, Zn, Bi, In, Mg, Ga, Cd, a Si alloy, a Sn alloy or an Al alloy; metal oxide capable of doping and undoping lithium such as SiOβ (0 < β < 2), SnO₂, vanadium oxide, lithium vanadium oxide; or a complex comprising the metallic material and the carbonaceous material such as a Si-C complex or a Sn-C complex. Additionally, a metal lithium thin film may be used for the negative electrode active material. Additionally, the carbon material may include low crystalline carbon and high crystalline carbon. The low crystalline carbon typically includes soft carbon and hard carbon, and the high crystalline carbon typically includes high temperature sintered carbon, for example, amorphous, platy, flaky, spherical or fibrous natural graphite or artificial graphite, Kish graphite, pyrolytic carbon, mesophase pitch based carbon fibers, meso-carbon microbeads, mesophase pitches and petroleum or coal tar pitch derived cokes.

The binder and the conductive material may be the same as those of the positive electrode described above.

### [Others]

In general, a separator may be interposed between the positive electrode and the negative electrode.

In the lithium secondary battery, the separator separates the negative electrode from the positive electrode and provides a passage for movement of lithium ions, and may include, without limitation, any separator commonly used in lithium secondary batteries, and in particular, preferably, those having low resistance to the electrolyte ion movement and good electrolyte solution wettability. Specifically, the separator may include, for example, a porous polymer film made of a polyolefin-based polymer such as an ethylene homopolymer, a propylene homopolymer, an ethylene/butene copolymer, an ethylene/hexene copolymer and an ethylene/methacrylate copolymer or a stack of two or more porous polymer films. Additionally, the separator may include common porous non-woven fabrics, for example, non-woven fabrics made of high melting point glass fibers and polyethylene terephthalate fibers. Additionally, to ensure the heat resistance or mechanical strength, the coated separator comprising ceramics or polymer materials may be used, and may be selectively used with a single layer or multilayer structure.

Optionally, the lithium secondary battery may further comprise a battery case accommodating an electrode assembly comprising the positive electrode, the negative electrode and the separator, and a sealing member to seal up the battery case.

The lithium secondary battery according to the present disclosure is useful in the field of mobile devices including mobile phones, laptop computers and digital cameras, and electric vehicles including hybrid electric vehicles (HEVs).

Accordingly, according to another embodiment of the present disclosure, there are provided a battery module comprising the lithium secondary battery as a unit cell and a battery pack comprising the same.

The battery module or the battery pack may be used as a power source of at least one medium- and large-scale device of power tools; electric vehicles including electric vehicles (EVs), hybrid electric vehicles, and plug-in hybrid electric vehicles (PHEVs); or energy storage systems.

Hereinafter, the embodiment of the present disclosure will be described in detail.

Secondary particles formed by agglomeration of Ni-rich composite transition metal hydroxide particles are obtained as a precursor using the coprecipitation method known in the technical field and mixed with a lithium source and then sintered to prepare Liₐ[NiₓCo_{y}M¹_{z}M²_{w}]O₂ (where a=1, x=0.86, y=0.05, z=0.07, w=0.02, M₁=Mn, M₂=Al) in the form of secondary particles formed by agglomeration of primary particles.

### Manufacture of positive electrode active material

### (Production of lithium composite transition metal oxide in the form of secondary particles)

Secondary particles formed by agglomeration of Ni-rich composite transition metal hydroxide particles are obtained as a precursor using the coprecipitation method known in the technical field and mixed with a lithium source and then sintered to prepare a lithium composite transition metal oxide positive electrode material represented by the following chemical formula in the form of secondary particles formed by agglomeration of primary particles.
Primary particle: Liₐ[NiₓCo_{y}M¹_{z}]O₂ (where a=1, x=0.60, y=0.20, z=0.20, M₁=Mn)
Secondary particle: Liₐ[NiₓCo_{y}M¹_{z}]O₂ (where a=1.03, x=0.80, y=0.10, z=0.10, M₁=Mn)
Tertiary particle: Liₐ[NiₓCo_{y}M¹_{z}M²_{w}]O₂ (where a=1.05, x=0.90, y=0.04, z=0.03, w=0.01, M₁=Mn, M₂=Al)

### (Formation of boron containing coating layer)

First positive electrode active material: 100g of the primary particles and 0.5g of boric acid (boric acid HBO₃) powder are mixed and sintered in a sintering furnace at the temperature of 300°C for 5 hours in an air atmosphere to form a coating layer, and the sintered product is milled and sieved, yielding a positive electrode active material.

Second positive electrode active material: is manufactured by the same method as the first positive electrode active material except that the amount of the boric acid powder is changed to 2g.

Third positive electrode active material: is manufactured by the same method as the first positive electrode active material except that the secondary particles are used instead of the primary particles.

Fourth positive electrode active material: is manufactured by the same method as the second positive electrode active material except that the secondary particles are used instead of the primary particles.

Fifth positive electrode active material: is manufactured by the same method as the first positive electrode active material except that the tertiary particles are used instead of the primary particles.

Sixth positive electrode active material: is manufactured by the same method as the second positive electrode active material except that the tertiary particles are used instead of the primary particles.

Seventh positive electrode active material: is manufactured by the same method as the second positive electrode active material except that when forming the coating layer, the sintering temperature is changed to 500°C and the tertiary particles are used instead of the primary particles.

### Example 1

### Example 1-1

The first positive electrode active material, a carbon black conductive material and a PVdF binder are mixed at a weight ratio of 92.5:3.5:4 to prepare a positive electrode slurry, and the positive electrode slurry is applied to a surface of an aluminum current collector, followed by drying at 130°C and rolling to manufacture a positive electrode. For a negative electrode, a lithium metal is used.

An electrode assembly comprising the positive electrode and the negative electrode and a porous PE separator between the positive electrode and the negative electrode is made and placed in a case, and a nonaqueous electrolyte solution (an electrolyte solution prepared by dissolving 0.1M LiPF6 in an EC/EMC/DEC organic solvent mixed at a volume ratio of 3:4:3) is injected into the case to manufacture a lithium secondary battery.

### Example 1-2

A lithium secondary battery is manufactured in the same way as example 1-1 except that 2 weight% of LiODFB is further added based on the total weight of the electrolyte solution.

### Example 1-3

A lithium secondary battery is manufactured in the same way as example 1-1 except that the second positive electrode active material is used instead of the first positive electrode active material.

### Example 1-4

A lithium secondary battery is manufactured in the same way as example 1-2 except that the second positive electrode active material is used instead of the first positive electrode active material.

### Example 2

### Example 2-1

A lithium secondary battery is manufactured in the same way as example 1-1 except that the third positive electrode active material is used instead of the first positive electrode active material.

### Example 2-2

A lithium secondary battery is manufactured in the same way as example 1-2 except that the third positive electrode active material is used instead of the first positive electrode active material.

### Example 2-3

A lithium secondary battery is manufactured in the same way as example 1-3 except that the fourth positive electrode active material is used instead of the first positive electrode active material.

### Example 2-4

A lithium secondary battery is manufactured in the same way as example 1-4 except that the fourth positive electrode active material is used instead of the first positive electrode active material.

### Example 3

### Example 3-1

A lithium secondary battery is manufactured in the same way as example 1-1 except that the fifth positive electrode active material is used instead of the first positive electrode active material.

### Example 3-2

A lithium secondary battery is manufactured in the same way as example 1-2 except that the fifth positive electrode active material is used instead of the first positive electrode active material.

### Example 3-3

A lithium secondary battery is manufactured in the same way as example 1-3 except that the sixth positive electrode active material is used instead of the first positive electrode active material.

### Example 3-4

A lithium secondary battery is manufactured in the same way as example 1-4 except that the sixth positive electrode active material is used instead of the first positive electrode active material.

### Comparative example 1

### Comparative example 1-1

A lithium secondary battery is manufactured in the same way as example 1-1 except that the positive electrode active material having the coating layer formed at the sintering temperature of 600°C is used.

### Comparative example 1-2

A lithium secondary battery is manufactured in the same way as comparative example 1-1 except that 3 weight% of LiODFB is further added based on the total weight of the electrolyte solution.

### Comparative example 1-3

A lithium secondary battery is manufactured in the same way as comparative example 1-1 except that the amount of the boric acid powder is four times as large when forming the coating layer.

### Comparative example 2

### Comparative example 2-1

A lithium secondary battery is manufactured in the same way as comparative example 1-1 except that the third positive electrode active material is used instead of the first positive electrode active material.

### Comparative example 2-2

A lithium secondary battery is manufactured in the same way as comparative example 1-2 except that the third positive electrode active material is used instead of the first positive electrode active material.

### Comparative example 2-3

A lithium secondary battery is manufactured in the same way as comparative example 1-3 except that the third positive electrode active material is used instead of the first positive electrode active material.

### Comparative example 3

### Comparative example 3-1

A lithium secondary battery is manufactured in the same way as comparative example 1-1 except that the fifth positive electrode active material is used instead of the first positive electrode active material.

### Comparative example 3-2

A lithium secondary battery is manufactured in the same way as comparative example 1-2 except that the fifth positive electrode active material is used instead of the first positive electrode active material.

### Comparative example 3-3

A lithium secondary battery is manufactured in the same way as comparative example 1-3 except that the fifth positive electrode active material is used instead of the first positive electrode active material.

### Comparative example 4

A lithium secondary battery is manufactured in the same way as example 1-1 except that the seventh positive electrode active material is used instead of the first positive electrode active material.

### <Evaluation of life characteristics of lithium secondary battery>

In the case of initial charge/discharge, the manufactured lithium secondary battery cell is charged at 0.1C in CCCV mode at 25°C until 4.25V and discharged at a constant current of 0.1C until 3.0V.

In the case of 100 cycle-characteristics, the charge/discharge test is conducted by charging at 0.3C in CCCV mode at 45°C until 4.2V and discharging at a constant current of 0.3C until 3.0V.

### <Measurement of average particle size of primary particles and D50 of secondary particles>

The average particle size of the primary particles of the lithium composite transition metal oxide is measured using XRD, and D50 of the secondary particles of the reference is measured using laser diffraction.

As a result of the measurement, the average particle size of the primary particles is 0.15 µm, and D50 of secondary particles is 10 µm.

### <Measurement of boron content in positive electrode active material and boron content in nonaqueous electrolyte solution>

### a. Measurement of boron content in positive electrode active material

The sample is taken in a small amount and introduced into a teflon tube, its weight is measured, and hydrochloric acid, peroxide and hydrofluoric acid are fed into the teflon tube containing the sample and heated to completely dissolve the sample. Subsequently, Internal STD (Sc) is added to the teflon tube, followed by dilution with ultrapure water, and the boron content is measured by analysis using ICP-OES.

### b. Measurement of boron content in nonaqueous electrolyte solution

The sample is put into a platinum crucible, ultrapure water is added, and strong nitric acid is fed into the platinum crucible, followed by heating and drying. Subsequently, strong nitric acid is fed again and peroxide is added, and this process is repeatedly performed to completely decompose organics. When the organics are completely decomposed, ultrapure water is added to dilute the solution, and the boron content is measured by analysis using ICP-OES.

Each amount measured by the above-described measurement method, its calculated amount ratio and the consequential battery life characteristics are shown in the following Table 1.

**[Table 1]**

| | Ni content in positive electrode active material (mol%) | Boron content A in positive electrode active material (ppm) | Boron content B in nonaqueous electrolyte solution (ppm) | B/A | 0.3C, 100 cycles, cell life maintenance (%) |
|---|---|---|---|---|---|
| Example 1-1 | 60 | 500 | 10 | 0.02 | 93 |
| Example 1-2 | | 500 | 2000 | 4 | 95 |
| Example 1-3 | | 2000 | 10 | 0.005 | 94 |
| Example 1-4 | | 2000 | 2000 | 1 | 95 |
| Example 2-1 | 80 | 500 | 10 | 0.02 | 93 |
| Example 2-2 | | 500 | 2000 | 4 | 94 |
| Example 2-3 | | 2000 | 10 | 0.005 | 94 |
| Example 2-4 | | 2000 | 2000 | 1 | 95 |
| Example 3-1 | 90 | 500 | 10 | 0.02 | 92 |
| Example 3-2 | | 500 | 2000 | 4 | 93 |
| Example 3-3 | | 2000 | 10 | 0.005 | 93 |
| Example 3-4 | | 2000 | 2000 | 1 | 94 |
| Comparative example 1-1 | 60 | 500 | 0 | 0 | 88 |
| Comparative example 1-2 | | 500 | 3000 | 6 | 89 |
| Comparative example 1-3 | | 2000 | 0 | 0 | 89 |
| Comparative example 2-1 | 80 | 500 | 0 | 0 | 86 |
| Comparative example 2-2 | | 500 | 3000 | 6 | 88 |
| Comparative example 2-3 | | 2000 | 0 | 0 | 88 |
| Comparative example 3-1 | 90 | 500 | 0 | 0 | 82 |
| Comparative example 3-2 | | 500 | 3000 | 6 | 85 |
| Comparative example 3-3 | | 2000 | 0 | 0 | 84 |
| Comparative example 4 | 90 | 2000 | 1 | 0.000 5 | 86 |

Referring to the data in Table 1, it can be seen that examples in which the ratio B/A of the boron content B in the nonaqueous electrolyte solution to the boron content A in the positive electrode active material is controlled to the above-described range have better life characteristics than comparative examples in which the B/A is outside of the above-described range.

## Claims

1. A lithium secondary battery, comprising:
a positive electrode comprising a positive electrode active material, a negative electrode comprising a negative electrode active material and a nonaqueous electrolyte solution,
wherein the positive electrode active material comprises a lithium composite transition metal oxide having a nickel content of 60 mol% or more in a total transition metal in a form of secondary particles formed by agglomeration of primary particles; and a boron containing coating layer on a surface of all or some of the primary particles,
wherein the lithium composite transition metal oxide is represented by the following chemical formula 1:
<Chemical formula 1> Liₐ[NiₓCo_{y}M¹_{z}M²_{w}]O₂
where M¹ is at least one selected from Mn and Al,
M² is at least one selected from Zr, B, W, Mo, Cr, Nb, Mg, Hf, Ta, La, Ti, Sr, Ba, Ce, F, P, S and Y, and
0.9≤a≤1.3, 0.6≤x<1.0, 0<y≤0.4, 0<z≤0.4, 0≤w≤0.4, x+y+z+w=1.
wherein the nonaqueous electrolyte solution comprises a boron dissolved in the nonaqueous electrolyte solution,
wherein the boron content (A) in the positive electrode active material is 100 to 4,000 ppm, and the boron content (B) in the nonaqueous electrolyte solution is 1 to 3,000 ppm, wherein boron content is determined by the method in the description under the heading *"Measurement of boron content in positive electrode active material and boron content in nonaqueous electrolyte solution",* and
wherein a ratio B/A of the boron content (B) in the nonaqueous electrolyte solution to the boron content (A) in the positive electrode active material is 0.001 to 5.

2. The lithium secondary battery according to claim 1, wherein the nonaqueous electrolyte solution comprises a boron containing lithium salt.

3. The lithium secondary battery according to claim 1, wherein the nonaqueous electrolyte solution does not comprise a boron containing lithium salt.

4. The lithium secondary battery according to claim 1, wherein the B/A is 0.005 to 4.

5. The lithium secondary battery according to claim 1, wherein the boron content (A) in the positive electrode active material is 500 to 2,000 ppm, and the boron content (B) in the nonaqueous electrolyte solution is 10 to 2,000 ppm.

6. The lithium secondary battery according to claim 1, wherein the boron content (A) in the positive electrode active material is 500 to 2,000 ppm, the boron content (B) in the nonaqueous electrolyte solution is 10 to 2,000 ppm, and the B/A is 0.005 to 4.

7. The lithium secondary battery according to claim 1, wherein an average particle size of the primary particles is 0.1 to 8 µm, and a D50 of the secondary particles is 2 to 15 µm, wherein average particle size of the primary particles and D50 of the secondary particles is determined by the method in the description under the heading *"Measurement of average particle size of primary particles and D50 of secondary particles".*

8. The lithium secondary battery according to claim 1, wherein the coating layer comprises at least one selected from the group consisting of a lithium boron oxide and a boron oxide.

## Patentansprüche

1. Lithium-Sekundärbatterie, umfassend:
eine positive Elektrode, umfassend ein Positivelektroden-Aktivmaterial, eine negative Elektrode, umfassend ein Negativelektroden-Aktivmaterial, und eine nichtwässrige Elektrolytlösung,
worin das Positivelektroden-Aktivmaterial ein Lithium-Übergangsmetall-Kompositoxid mit einem Nickelgehalt von 60 mol-% oder mehr an den gesamten Übergangsmetallen in einer Form von Sekundärpartikeln, gebildet durch Agglomeration von Primärpartikeln; und eine borhaltige Beschichtungsschicht auf einer Oberfläche von allen oder einigen der Primärpartikeln umfasst,
worin das Lithium-Übergangsmetall-Kompositoxid durch die folgende chemische Formel 1 dargestellt ist:
<Chemische Formel 1> Liₐ[NiₓCo_{y}M¹_{Z}M²_{w}]O₂
worin M¹ zumindest eines ist, ausgewählt aus Mn und Al,
M² zumindest eines ist, ausgewählt aus Zr, B, W, Mo, Cr, Nb, Mg, Hf, Ta, La, Ti, Sr, Ba, Ce, F, P, S und Y, und
0,9≤a≤1,3, 0,6≤x<1,0, 0<y≤0,4, 0<z≤0,4, 0≤w≤0, 4, x+y+z+w=1,
worin die nichtwässrige Elektrolytlösung Bor, gelöst in der nichtwässrigen Elektrolytlösung, umfasst,
worin der Borgehalt (A) in dem Positivelektroden-Aktivmaterial 100 bis 4.000 ppm beträgt und der Borgehalt (B) in der nichtwässrigen Elektrolytlösung 1 bis 3.000 ppm beträgt, worin der Borgehalt durch das in der Beschreibung unter der Überschrift "Measurement of boron content in positive electrode active material and boron in nonaqueous electrolyte solution" beschriebene Verfahren bestimmt wird, und
worin das Verhältnis B/A des Borgehalts (B) in der nichtwässrigen Elektrolytlösung zum Borgehalt (A) in dem Positivelektroden-Aktivmaterial 0,001 bis 5 beträgt.

2. Lithium-Sekundärbatterie gemäß Anspruch 1, worin die nichtwässrige Elektrolytlösung ein borhaltiges Lithiumsalz umfasst.

3. Lithium-Sekundärbatterie gemäß Anspruch 1, worin die nichtwässrige Elektrolytlösung kein borhaltiges Lithiumsalz umfasst.

4. Lithium-Sekundärbatterie gemäß Anspruch 1, worin B/A 0,005 bis 4 beträgt.

5. Lithium-Sekundärbatterie gemäß Anspruch 1, worin der Borgehalt (A) in dem Positivelektroden-Aktivmaterial 500 bis 2.000 ppm beträgt und der Borgehalt (B) in der nichtwässrigen Elektrolytlösung 10 bis 2.000 ppm beträgt.

6. Lithium-Sekundärbatterie gemäß Anspruch 1, worin der Borgehalt (A) in dem Positivelektroden-Aktivmaterial 500 bis 2.000 ppm beträgt, der Borgehalt (B) in der nichtwässrigen Elektrolytlösung 10 bis 2.000 ppm beträgt, und B/A 0,005 bis 4 beträgt.

7. Lithium-Sekundärbatterie gemäß Anspruch 1, worin die mittlere Partikelgröße der Primärpartikel 0,1 bis 8 µm beträgt und der D50 der Sekundärpartikel 2 bis 15 µm beträgt, worin die mittlere Partikelgröße der Primärpartikel und D50 der Sekundärpartikel durch das in der Beschreibung unter der Überschrift "Measurement of average particle size of primary particles and D50 of secondary particles" beschriebene Verfahren bestimmt wird.

8. Lithium-Sekundärbatterie gemäß Anspruch 1, worin die Beschichtungsschicht zumindest eines umfasst, ausgewählt aus der Gruppe bestehend aus einem Lithium-Boroxid und einem Boroxid.

## Revendications

1. Batterie secondaire au lithium, comprenant :
une électrode positive comprenant un matériau actif d'électrode positive, une électrode négative comprenant un matériau actif d'électrode négative et une solution d'électrolyte non aqueuse,
dans laquelle le matériau actif d'électrode positive comprend un oxyde de métal de transition composite de lithium présentant une teneur en nickel de 60 %mol ou plus parmi tous les métaux de transition sous une forme de particules secondaires formées par agglomération de particules primaires ; et une couche de revêtement contenant du bore sur une surface de tout ou partie des particules primaires,
dans laquelle l'oxyde de métal de transition composite de lithium est représenté par la formule chimique 1 suivante :
<Formule chimique 1> Liₐ[NiₓCo_{y}M¹_{z}M²_{w}]O₂
où M¹ est au moins un sélectionné dans Mn et Al,
M² est au moins un sélectionné dans Zr, B, W, Mo, Cr, Nb, Mg, Hf, Ta, La, Ti, Sr, Ba, Ce, F, P, S et Y, et
0,9 ≤ a ≤ 1,3, 0,6 ≤ x < 1,0, 0 < y ≤ 0,4, 0 < z ≤ 0,4, 0 ≤ w ≤ 0,4, x + y + z + w = 1.
dans laquelle la solution d'électrolyte non aqueuse comprend du bore dissous dans la solution d'électrolyte non aqueuse,
dans laquelle la teneur en bore (A) dans le matériau actif d'électrode positive est de 100 à 4 000 ppm, et la teneur en bore (B) dans la solution d'électrolyte non aqueuse est de 1 à 3 000 ppm, dans laquelle la teneur en bore est déterminée par le procédé dans la description sous l'intitulé « *Mesure de la teneur en bore dans le matériau actif d'électrode positive et de la teneur en bore dans la solution d'électrolyte non aqueuse* », et
dans laquelle un rapport B/A de la teneur en bore (B) dans la solution d'électrolyte non aqueuse à la teneur en bore (A) dans le matériau actif d'électrode positive est de 0,001 à 5.

2. Batterie secondaire au lithium selon la revendication 1, dans laquelle la solution d'électrolyte non aqueuse comprend un sel de lithium contenant du bore.

3. Batterie secondaire au lithium selon la revendication 1, dans laquelle la solution d'électrolyte non aqueuse ne comprend pas un sel de lithium contenant du bore.

4. Batterie secondaire au lithium selon la revendication 1, dans laquelle le B/A est de 0,005 à 4.

5. Batterie secondaire au lithium selon la revendication 1, dans laquelle la teneur en bore (A) dans le matériau actif d'électrode positive est de 500 à 2 000 ppm, et la teneur en bore (B) dans la solution d'électrolyte non aqueuse est de 10 à 2 000 ppm.

6. Batterie secondaire au lithium selon la revendication 1, dans laquelle la teneur en bore (A) dans le matériau actif d'électrode positive est de 500 à 2 000 ppm, la teneur en bore (B) dans la solution d'électrolyte non aqueuse est de 10 à 2 000 ppm, et le B/A est de 0,005 à 4.

7. Batterie secondaire au lithium selon la revendication 1, dans laquelle une taille de particule moyenne des particules primaires est de 0,1 à 8 µm, et un D50 des particules secondaires est de 2 à 15 µm, dans laquelle une taille de particule moyenne des particules primaires et le D50 des particules secondaires sont déterminés par le procédé dans la description sous l'intitulé « *Mesure de la taille de particule moyenne des particules primaires et du D50 des particules secondaires* ».

8. Batterie secondaire au lithium selon la revendication 1, dans laquelle la couche de revêtement comprend au moins un sélectionné dans le groupe consistant en un oxyde de lithium et de bore et un oxyde de bore.
